Europäisches Patentamt

European Patent Office

Office européen des brevets

(19)

(11) Publication number:

**0 207 742**
**A2**

## (12) EUROPEAN PATENT APPLICATION

(21) Application number: 86304980.5

(22) Date of filing: 26.06.86

(51) Int. Cl.⁴: **H 01 M 10/34**
H 01 M 2/36, H 01 M 2/02
H 01 M 2/12, H 01 M 2/24

(30) Priority: 27.06.85 GB 8516223

(43) Date of publication of application:
07.01.87 Bulletin 87/2

(84) Designated Contracting States:
DE FR GB IT SE

(71) Applicant: CHLORIDE GROUP PUBLIC LIMITED
COMPANY
52 Grosvenor Gardens
London SW1W 0AU(GB)

(72) Inventor: Andrews, Graham Philip
19 Broom Way
Westhoughton Bolton, BL5 3TZ(GB)

(72) Inventor: Morrell, David
Burnside Chelford Road
Prestbury Cheshire, SK10 4AW(GB)

(74) Representative: Jennings, Nigel Robin et al,
KILBURN & STRODE 30 John Street
London WC1N 2DD(GB)

(54) Multicell recombination electric storage batteries.

(57) A battery comprises a container 2 closed by a lid 6 and which defines a plurality of cells separated by intercell partitions 4,8 which extend up to the lid. The battery contains substantially no free unabsorbed electrolyte and each intercell partition has a smaller aperture 26 formed in it with an area of between 3 and 10mm$^2$ and a larger aperture with an area of between 10 and 20mm$^2$. The battery is filled with electrolyte by tilting it about an axis perpendicular to the planes of the partitions with the smaller holes uppermost and introducing all the electrolyte into one cell and permitting it to flow into the remaining cells through the larger apertures whilst the displaced gas redistributes itself through the smaller apertures.

FIG. 1.

EP 0 207 742 A2

## MULTICELL RECOMBINATION ELECTRIC
## STORAGE BATTERIES

The present invention relates to multicell recombination electric storage batteries, in particular of lead acid type, and is concerned with both the structure of such batteries and a method of filling such batteries with electrolyte.

Recombination batteries are those in which gas evolved on overcharge is not vented to atmosphere but is induced to recombine within the battery. Such batteries are constructed so that substantially only oxygen is evolved on overcharge which diffuses through the separators separating adjacent plates of opposite polarity and is recombined at the negative plates. Such batteries generally have substantially no free unabsorbed electrolyte whereby substantially all the electrolyte is absorbed within the separators and plates.

Conventional lead acid batteries are flooded with electrolyte and adjacent cells are reliably sealed from one another to ensure that intercell ionic leakage currents can not flow which would degrade the performance of the battery and shorten its service life. The cells of such batteries are thus inherently not in gas-communication with each other and are therefore each provided with a respective vent to discharge evolved gases to the atmosphere.

It has been found that in recombination batteries with no free unabsorbed electrolyte it is not necessary for adjacent cells to be reliably sealed from one another since intercell ionic leakage currents tend not to occur by reason of the fact that there is no free electrolyte available for the conduction of such currents. It is possible for the rate of gas evolution in a recombination battery temporarily to exceed the rate of gas recombination and to avoid the battery container bursting it is therefore necessary to provide a safety vent. The absence of a seal between adjacent cells permits the provision of only one safety vent for the whole battery rather than one vent per cell which results in a substantial saving in the manufacturing cost of the battery.

U.S. Patent No.4383011 discloses a multicell recombination lead acid battery in which the cells are separated by intercell partitions integral with the container. The plates are separated by microfine glass fibre separator material and all the electrolyte is absorbed within the plates and separators. The intercell partitions terminate short of the lid whereby there is a gas space beneath the lid which is common to all the cells and with which all the cells communicate. The lid is provided with a single vent which is arranged to open at a small superatmospheric pressure to vent the common gas space to atmosphere.

Electric storage batteries are generally filled by adding electrolyte to each cell individually and this is a time-consuming and/or labour intensive task. An advantage of the construction disclosed in the prior U.S. Patent is that it enables the use of a simplified filling method in which a predetermined volume of electrolyte is added to one cell only and permitted to run over the tops of the intercell partitions to fill all the cells.

A further advantage of the construction disclosed in the prior U.S. Patent is said to be that if one of the cells has more electrolyte than the other cells it will start to evolve gas before the other cells and that some of the gas evolved in the one cell will be recombined

in other cells. It is said that the amount of electrolyte in the cells will thus tend to become equalised. Whilst this phenomenon is indeed found to occur what is transferred is only water and the amount of sulphuric acid in each cell inherently remains constant. Accordingly, if there are two cells containing differing volumes of electrolyte of the same specific gravity the cell with the greater amount of electrolyte will start to gas first when the battery is charged and some of this gas will be recombined in the other cell thereby transferring water to it. However, this results in a fall in the specific gravity of the electrolyte in the other cell and an increase in the first cell whereby the partial pressure of the water in the first cell sinks below that in the second cell. Any such difference in partial pressures tends to become equalised over a period of time by virtue of a gradual diffusion of water vapour and thus the equalisation process described in the prior U.S. patent is gradually reversed.

In practice, not only may the cells have differing volumes of electrolyte but the initial specific gravities may differ also for a variety of reasons such as the fact that the different cells experience a different degree of initial electrolytic formation. Such differences in gravity result in a transfer of water between the cells in a manner which tends to equalise the gravities rather than equalise the volumes.

The rate of transfer of water between cells by the mechanism described in the prior U.S. patent is substantially independent of temperature but that by the differential partial pressure mechanism increases sharply with temperature. The rate of water transfer by the latter mechanism is also a non-linear function of the area of communication of the cells. An automotive battery is commonly accommodated in the engine compartment of a car and may operate at a temperature of typically about 60°C or even more and it has been found that at this temperature the rate of water transfer by the partial differential pressure mechanism decreases steadily down to an area of communication of 80 mm$^2$ and thereafter decreases substantially more rapidly.

U.S. Patent No.3846175 discloses a recombination lead acid battery in which adjacent cells are separated from one another by intercell partitions which are integral with a monobloc container. The cells are closed by an inner lid which has a respective depending vent communicating with each cell. The vents communicate with a common gas storage area defined by the inner lid and an outer lid. The cells thus communicate with one another over a relatively small area and the rate of water transfer by the differential partial pressure mechanism is thus very small. However, the electrolyte must be added to each cell individually and this is not only time-consuming and labour intensive but it is also found to be very difficult to match the electrolyte volumes in all the cells.

It is an object of the invention to provide a multicell recombination electric storage battery, in particular of lead acid automotive type, whose cells communicate thereby permitting only a single relief valve to be used but which communicate over a sufficiently small area that the rate of water transfer by the differential partial pressure mechanism is minimised and which inherently permits the cells to be filled with electrolyte by an efficient method which does not comprise adding a metered volume of electrolyte to each cell.

According to the present invention a multicell recombination electric storage battery comprises a container which is closed by a lid and which defines a plurality of cells separated by intercell partitions which extend up to the lid and contain substantially no free unabsorbed electrolyte, each intercell partition having two or more apertures formed in it, each aperture having an area in excess of $3mm^2$ but less than $80mm^2$.

It is preferred that the total area of the apertures in each intercell partition does not exceed $80mm^2$ and that each intercell partition has only two apertures in it. It is preferred that one of the apertures has an area of less than 15 or $10mm^2$ but in excess of $5mm^2$ and that the other aperture has an area less than 60 or 40 or more preferably $20mm^2$ but in excess of $10mm^2$. It is preferred that both apertures are of circular shape.

Thus in the preferred embodiment of the battery in accordance with the invention there are two holes in each intercell partition whereby the battery has a gas space common to all the cells. This enables the battery to be provided with only a single safety vent, e.g. in the lid sealing the container, which is arranged to open at a small superatmospheric gauge pressure of e.g. 0.05 to 0.3 bar. For the purpose of providing a common gas space it is of course only necessary to provide a single aperture in each partition but the provision of a second aperture permits the use of a very simple method of filling the battery with electrolyte in which all the electrolyte, i.e. sulphuric acid in the case of a lead acid battery, is introduced into one cell and is permitted to run into the remaining cells through the apertures in the partitions. The larger aperture is preferably situated adjacent one side of the associated intercell partition and the smaller aperture adjacent the other side of the intercell partition. The battery may be tilted during the filling process so that the smaller apertures are uppermost whereby the electrolyte will flow from cell to cell through the larger apertures and the gas that is displaced can redistribute itself amongst the cells through the smaller apertures.

As discussed above, in order to minimise the transfer of water between the cells by the differential partial pressure mechanism it is desirable to ensure that the area of communication between adjacent cells is as small as possible. The function of the smaller holes is to permit the redistribution of displaced gas whilst filling the battery with electrolyte and this hole is therefore as small as possible bearing in mind that it must be sufficiently large that it will not become inadvertently blocked, either by small particles or by an electrolyte meniscus. A diameter of about 3mm has been found to be suitable. The function of the larger holes is to permit the electrolyte to flow from cell to cell and in order to minimise the filling time these holes are desirably as large as possible. This requirement is of course in direct opposition to the requirement that the area of communication between the cells should be as small as possible and the range of sizes referred to above has been found to represent the optimum balance between these conflicting requirements.

The present invention thus embraces also a method of filling a battery of the type referred to above which includes evacuating the container, introducing all the electrolyte into one cell and permitting it to run into all the cells through the larger apertures in the intercell partitions. It is preferred that during this process the battery is inclined to the horizontal, e.g. by between 20 and $50^{\circ}$, about an axis perpendicular to the planes of the intercell partitions.

The intercell partitions inherently extend up to the lid and are preferably connected thereto to increase the mechanical stability of the battery. The partitions may be integral with the container and extend right up to the lid and be welded thereto or they may be constituted by webs integral with the container which are connected, e.g. welded, to corresponding webs integral with the lid. It is, however, not essential that the intercell partitions be connected to the lid in which event there may be a small area of gas communication between adjacent cells between the tops of the intercell partitions and the lid, though the area of such communication should be minimised. The intercell connections of necessity pass through the intercell partitions rather than over them as in the construction of U.S. Patent No.4383011 and may be sealed to them. It is, however, not essential that they be so sealed in which event there may be a small area of gas communication between adjacent cells around the intercell connectors. The area of such communication should however also be minimised and it is in any event preferred that the total area of communication between each pair of adjacent cells is less than $80mm^2$ or $60mm^2$ or $40mm^2$ and most preferably less than $30mm^2$ or even $25mm^2$.

In the preferred embodiment the intercell connectors pass through a notch in the top of the intercell partitions or the top of partition webs connected to the container and their side and top surfaces are engaged by a sealing member which engages and substantially forms a seal with the partitions or partition webs. The sealing members preferably extend up to the top of the partitions or the partition webs and may be connected to the lid or the webs integral with the lid.

Further features and details of the present invention will be apparent from the following description of one specific embodiment which is given by way of example with reference to the accompanying drawings, in which:

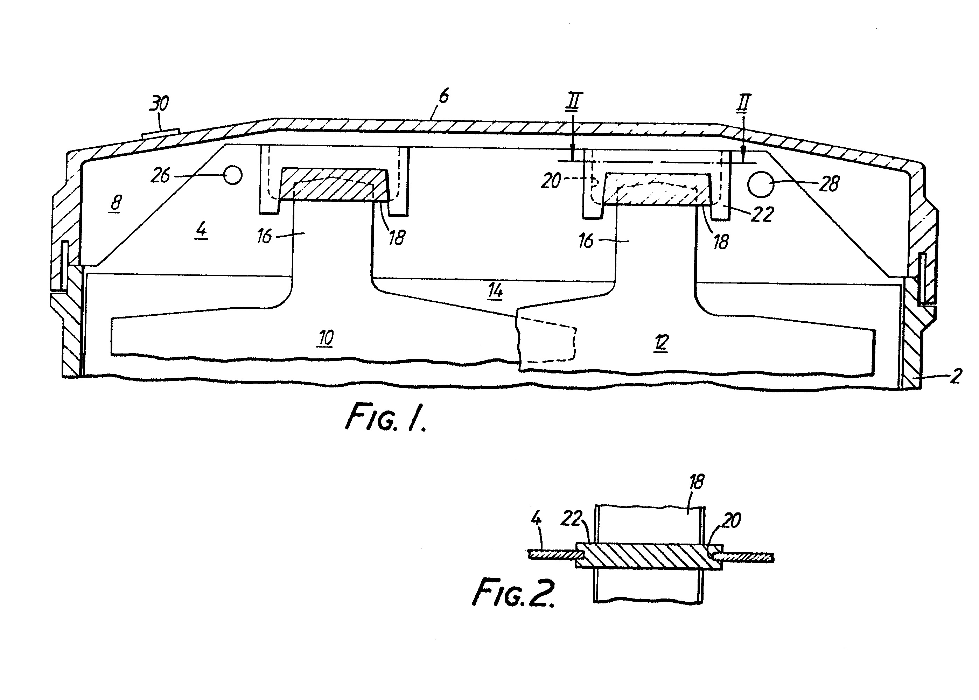

Figure 1 is a sectional elevation of the top portion of a 12 volt lead acid automotive battery in accordance with the present invention; and

Figure 2 is a scrap sectional view on the line II-II in Figure 1.

The battery includes a rectangular section container 2 of polypropylene within which are five intercell partition webs 4.which are integral with the container and extend above the top of the container and divide the container into six equally sized cell compartments. The container is sealed by a lid 6 which is welded to the container and which is provided with five further webs 8 whose thickness and position correspond to those of the webs 4. The lower edges of the webs 8 abut the upper edges of the webs 4 and are welded thereto and together constitute intercell partitions which impart substantial mechanical rigidity to the container.

The container contains a plurality of positive plates 10 alternating with negative plates 12 and interleaved with sheets 14 of separator material of microfine borosilicate glass fibre material of known type. As conventional, each plate is of generally rectangular shape and extends over substantially the full height and full width of the container. For the sake of simplicity only one plate of each polarity is illustrated in the drawing and the sheet of separator material between them has been omitted.

Each plate has an upstanding conductive plate lug 16. The lugs of the positive and negative plates are arranged in respective lines in each cell and each line is electrically connected by respective plate straps 18 of lead or lead alloy which are cast on or otherwise connected to the lugs. One plate strap in each end cell is connected to a respective battery terminal and each remaining plate is integral with a plate strap connecting the lugs of opposite polarity in an adjacent cell. Each such integral pair of plate straps constitutes an intercell connector which passes through a notch or cut-away portion 20 at the top of the intervening partition web 4. The undersurface of each intercell connector engages the top of the associated notch 20 and its side and upper surfaces are engaged by an inverted U shaped sealing member 22. The side edges of the sealing member 22 are provided with a respective vertical groove which accommodates the vertical edges of the notch 20. The intercell connector is not positively sealed to the intercell partition or the sealing member and the latter is not sealed to the partition web 8 but is welded to the partition web 4 in the same step as that in which the webs 4 and 8 are welded together. The intercell connectors are thus not sealed to the partitions but the area of leakage around them is minimised and is in any event not more than 1 or 2 $mm^2$.

Adjacent the top of each partition web 4 there is a vent hole 26 of 3mm diameter positioned at one end of the web and a larger filling hole 28 of 4.5mm diameter at the other end of the web. All the cells are thus in communication through these two holes. The interior of the battery communicates with the atmosphere through a non-return vent 30, e.g. of bunsen type which opens to vent the battery if the pressure within it should rise to e.g. 0.1 bar above atmospheric but does not permit any air to enter the battery.

During manufacture, a cell pack comprising alternating positive and negative plates 10,12 separated by sheets of separator material 14 is inserted into each compartment. Each cell pack is naturally somewhat larger than the associated compartment whereby it is subjected to a small compressive force when within the compartment. Either before or after insertion of the cell packs into the container the plate straps and intercell connectors
are provided in any conventional manner. The intercell
connectors extend through the notches 20 and a
respective sealing member 22 is pushed over each
intercell connector with the grooves in its side edges
acccommodating the edges of the notch until its upper
surface is flush with or slightly proud of the upper
edge of the associated web 4. A battery lid having a
single aperture at one end is then connected, in this
case welded, to the container and the webs 8 are simultaneously welded to the webs 4 and the sealing members 22.
The container is then tilted through 30$^\circ$ about one of
its longitudinal bottom edges, that is to say about
an axis perpendicular to the intercell partitions,
to place the holes 26 above the holes 28. A filling
and evacuating head (not shown) is connected to the
aperture on the lid and the container is evacuated to
as high a level of vacuum as possible. The total
volume of electrolyte required for the entire battery
is then injected through the aperture in the lid into
one of the end cells of the battery. The level of
electrolyte in that cell rapidly rises above the level
of the larger aperture 28 in the adjacent intercell
partition 4,8 and the electrolyte then flows rapidly
from cell to cell through the larger apertures under
the action of the reduced pressure and distributes
itself equally between the cells. During this process
air or other gases within the container redistribute
themselves through the smaller apertures 26 in the intercell partitions which are above the level of the
electrolyte.

**0207742**

When the filling process has been completed the filling and evacuating head is removed and the vent or non-return valve 30 is inserted in the aperture in the lid. Either before or after the filling process the two end cells are electrically connected to terminals on the lid in any conventional manner and the battery is then ready for its initial electrolytic formation and then for use.

The volume of electrolyte added to the battery is between 103 and 108% of that required to saturate the plates and separator material. There will therefore initially be a small excess of electrolyte within the cells though there is in fact still a small proportion of unfilled voids within the separator material. The recombination efficiency of the battery is therefore initially relatively low and thus when the battery is initially charged a proportion of the gas evolved is not recombined but is vented to atmosphere through the vent. This results in a progressive decrease in the excess of electrolyte and after a period of time whose length is determined by the operating and environmental conditions to which the battery is subjected and excess of electrolyte will disappear completely leaving all the electrolyte absorbed within the plates and separators and the separators exhibiting a significant unfilled void volume.

## CLAIMS

1. A multicell recombination electric storage battery comprising a container which is closed by a lid and which defines a plurality of cells separated by intercell partitions and containing substantially no free unabsorbed electrolyte, the cells communicating with one another through the intercell partitions, characterised in that each intercell partition (4,8) has two or more apertures (26,28) formed in it, each aperture having an area in excess of $3mm^2$ but less than $80mm^2$.

2. A battery as claimed in claim 1 characterised in that the total area of the apertures (26,28) in each intercell partition (4,8) does not exceed $80mm^2$.

3. A battery as claimed in claim 1 or claim 2 characterised in that each intercell partition (4,8) has only two apertures (26,28) formed in it.

4. A battery as claimed in claim 3 characterised in that one of the apertures (28) is larger than the other (26), the larger aperture (28) being situated adjacent one side of the associated intercell partition (4,8) and the smaller aperture (26) being situated adjacent the other side of the associated intercell partition (4,8).

5. A battery as claimed in claim 3 or claim 4 characterised in that one aperture (26) has an area of between 5 and $10mm^2$ and the other aperture (28) has an area of between 10 and $20mm^2$.

6.    A battery as claimed in any one of the preceding
claims characterised by a single relief vent 30 communicating with all the cells and arranged to open
at a gauge pressure of 0.05 to 0.3 bar.

7.    A battery as claimed in any one of the preceding
claims characterised in that the intercell partitions
(4,8) are connected to the lid.

8.    A battery as claimed in any one of the preceding
claims characterised in that the intercell connectors
(18) between adjacent cells extend through the
intercell partitions (4,8) and are not sealed thereto.

9.    A method of filling a battery as claimed in any one
of the preceding claims with electrolyte characterised
by the steps of evacuating the container (2), introducing
all the electrolyte into one cell and permitting it to
run into all the cells through the apertures (28) in
the intercell partitions (4,8).

10.    A method as claimed in claim 9 of filling a
battery as claimed in claim 4, characterised in that
the battery is inclined to the horizontal at between
$20^{o}$ and $50^{o}$ about an axis perpendicular to the planes
of the intercell partitions (4,8) with the smaller
holes (26) in the partitions uppermost.

FIG. I.

FIG. 2.

1/1

0207742